# FASCICULE DE BREVET EUROPEEN

(11) **EP 4 163 026 B1**
(45) Date de publication et mention de la délivrance du brevet: **04.12.2024**
(21) Numéro de dépôt: 22200969.8
(22) Date de dépôt: 11.10.2022
(51) Int. Cl.: B09B 3/40, F42D 5/04, C06B 21/00, F42B 33/06, A62D 3/20, A62D 3/40, F23G 5/00, F24D 5/04

(54) **INSTALLATION ET PROCEDE DE DESTRUCTION DE DECHETS PYROTECHNIQUES**
ANLAGE UND VERFAHREN ZUR VERNICHTUNG PYROTECHNISCHER ABFÄLLE
INSTALLATION AND METHOD FOR DESTROYING PYROTECHNICAL WASTE

(30) Priorité: 11.10.2021 FR 2110707
(43) Date de publication de la demande: 12.04.2023
(73) Titulaire: ROXEL France, 33160 Saint Médard en Jalles (FR)
(72) Inventeur: MERIEL, Laurent, 33160 SAINT-MEDARD EN JALLES Cedex (FR); FAVRE, Roland, 33160 SAINT-MEDARD EN JALLES Cedex (FR)
(74) Mandataire: Brevalex

(56) Documents cités:
- EP-A1- 1 595 607
- CN-A- 106 765 254
- CN-Y- 2 738 159
- US-A- 5 458 071

## Description

La présente invention se situe dans le domaine de l'élimination de déchets à hautes valeurs énergétiques, notamment de propergol, par brûlage.

Les déchets concernés par l'installation et le procédé de l'invention sont des déchets pouvant prendre la forme de propergol et/ou de produits pyrotechniques ou chimiques. Il s'agit de déchets comprenant au moins des traces de matériaux énergétiques, c'est-à-dire que ces déchets peuvent être définis comme n'étant pas inertes. Dans un exemple non-limitatif de fabrication de propergol solide, un déchet peut être tout élément non utilisable dans une fabrication normale, ou bien des résidus issus d'un traitement mécanique (par exemple du surplus de matières). Il peut s'agir de propergol (réticulé ou non réticulé) ou bien de tout produit ayant été mis en contact avec du propergol. Un déchet peut également être un équipement de protection individuelle (blouse, gants, lunettes de protection, masque, cartouches de masques respiratoires) ayant été en contact, de près ou de loin, avec du propergol. Autrement dit, par déchet comprenant au moins des traces de matériaux énergétiques, il faut comprendre tout déchet non inerte, c'est-à-dire comprenant au moins une molécule de produit énergétique (par exemple au moins une molécule de propergol).

Dans la suite, et à titre d'illustration de manière non-limitative, l'invention sera décrite avec des déchets comprenant au moins des traces de propergol. Un Homme du métier comprendra que l'invention s'applique similairement à d'autres déchets à haute valeur énergétique, et auxquels peuvent éventuellement être ajoutés tout autre déchet.

Dans le domaine de destruction de déchets énergétiques, il est impératif de respecter les règles élémentaires de sécurité, les règles liées à la sécurité pyrotechnique et les règles relatives à la protection de l'environnement.

Dans un propulseur à propergol solide, le propergol solide constitue le matériau dont la combustion génère des gaz dont l'éjection par la tuyère est responsable de la propulsion de l'engin sur lequel le propulseur est intégré.

Le démantèlement d'un propulseur à propergol solide, c'est-à-dire sa mise hors service définitive, consiste généralement à réduire celui-ci à une configuration telle que la fonction pour laquelle il a été conçu, à savoir la propulsion, et donc la combustion du propergol, ne puisse plus être assurée. La raison principale du démantèlement, en lien avec la durée de vie des moteurs, est la sécurité des biens, et surtout des personnels, pouvant se trouver en présence de ce propulseur même après sa mise à la réforme. La procédure de démantèlement adoptée, ainsi que les moyens mis en oeuvre, répondent généralement à des exigences diverses, telles que la simplicité des manoeuvres exécutées, ou la garantie de sécurité pyrotechnique (non propagation des effets). Ils doivent en outre être en adéquation avec les cadences de démantèlement imposées, c'est-à-dire avec la quantité de propulseurs à traiter durant une période donnée.

L'état de l'art propose plusieurs procédés de démantèlement, qui ne permettent cependant pas de répondre à des exigences élevées en matière de cadences de traitement, ni en matière de simplicité de mise en oeuvre. En outre, l'art antérieur propose des procédés de démantèlement de propulseurs complets et non pas de déchets quelconques qui puissent être directement détruits.

La Demanderesse dispose d'un savoir-faire dans le domaine de destruction propre de moteurs pyrotechniques. Par exemple, son brevet EP 2 721 367 décrit un procédé de démantèlement de propulseurs à propergol solide dans lequel le propulseur à démanteler est mis en marche de façon à consommer la totalité de propergol qu'il renferme, la combustion étant réalisée alors que le propulseur est monté sur un banc d'essai statique totalement immergé dans un bassin rempli d'eau. Un tel procédé garantit un démantèlement compatible du plus grand nombre possible de type de propulseurs à propergol solide et permet une simplification des opérations de démantèlement et un raccourcissement du laps de temps nécessaire à ce démantèlement. Toutefois, ce procédé n'est adapté qu'aux seuls propulseurs et n'offre pas la possibilité de détruire tout déchet pyrotechnique sous différentes formes (propergol seul, ou bien aussi blouse, objets destinés au rebut, etc.).

D'autres procédés de destruction de tels déchets existent, tel que celui décrit dans le document EP 1 595 607 A1. Il s'agit de techniques de brûlage à l'air libre sans captation et traitement de gaz, ou bien de brûlage dans une enceinte avec captation et traitement de gaz ou bien d'élimination de propergols composites par procédé chimique, ou bien d'inertage par oxydation supercritique. Ces solutions sont à la fois complexes et coûteuses à mettre en oeuvre, et généralement adaptées à un seul type de déchet. De plus, ces procédés ne représentent pas toujours une solution satisfaisante pour la protection de l'environnement.

L'invention vise à pallier tout ou partie des problèmes cités plus haut en proposant une installation et un procédé de destruction propre, par brûlage, de déchets pyrotechniques, qui dépend peu de la nature du déchet à traiter et nécessite peu ou pas de préparation des déchets avant brûlage. En outre, en plus d'accepter des objets métalliques et de ne pas imposer une homogénéité des déchets, l'installation selon l'invention est facilement réutilisable pour différents types de déchets pyrotechniques. Enfin, comme cela apparaîtra à la description détaillée de l'invention, le procédé est peu consommateur de ressources. Il en résulte un coût de mise en oeuvre relativement faible.

A cet effet, l'invention a pour objet une installation de destruction de déchets comprenant au moins des traces de matériaux énergétiques, préférentiellement de propergol, caractérisée en ce qu'elle comprend :
- une enceinte délimitée par des parois latérales, un fond et un toit, l'enceinte étant au moins partiellement remplie d'un milieu liquide, préférentiellement d'eau, jusqu'à un premier niveau ;
- une chambre comprenant :
   o une entrée, ladite entrée étant destinée à alimenter la chambre en déchets à détruire par combustion dans la chambre ;
   o une sortie ;
   la chambre étant immergée dans le milieu liquide de l'enceinte, l'entrée de la chambre s'ouvrant sur une des parois latérales de l'enceinte,
- un conduit d'évacuation s'étendant entre une première extrémité et une seconde extrémité, la première extrémité étant connectée à la sortie de la chambre, la seconde extrémité étant située dans le milieu liquide, préférentiellement à proximité du fond de l'enceinte, le conduit d'évacuation s'élevant entre sa première extrémité et sa seconde extrémité jusqu'à un second niveau, supérieur au premier niveau, le conduit d'évacuation étant configuré pour évacuer, à la seconde extrémité dans le milieu liquide, des gaz et des résidus solides volatiles produits dans la chambre lors de la combustion.

Avantageusement, l'installation de destruction de déchets selon l'invention comprend en outre une unité de traitement du milieu liquide configurée pour être alimentée par le milieu liquide auquel les gaz et résidus solides volatiles produits lors de la combustion se sont incorporés et pour délivrer une matière sèche et une eau traitée, préférentiellement destinée à être réinjectée dans l'enceinte en tant que milieu liquide.

Avantageusement, l'installation de destruction de déchets selon l'invention comprend un injecteur de gaz relié à l'entrée de la chambre, l'injecteur de gaz étant configuré pour injecter dans la chambre du gaz inerte, préférentiellement de l'azote, et/ou de l'air.

Avantageusement, l'installation de destruction de déchets selon l'invention comprend un dispositif d'augmentation de la durée de contact des gaz évacués avec le milieu liquide.

Avantageusement, le dispositif d'augmentation de la durée de contact des gaz évacués avec le milieu liquide comprend des grilles perforées disposées à différents niveaux dans l'enceinte ; en suivant le trajet des gaz, en partant de la partie basse de l'enceinte et en remontant vers la partie haute, les grilles se succèdent avec des perforations de diamètre de plus en plus petit.

Avantageusement, le dispositif d'augmentation de la durée de contact des gaz évacués avec le milieu liquide prend la forme de chicanes.

Avantageusement, le conduit d'évacuation comprend un clapet anti-retour disposé à la seconde extrémité, le clapet anti-retour comprenant un élément de clapet configuré pour être mobile entre une position de clapet fermé qui empêche un refoulement du milieu liquide dans la chambre et une position de clapet ouvert dans laquelle les gaz et les résidus solides volatiles produits dans la chambre lors de la combustion sont évacués dans le milieu liquide.

Avantageusement, le toit de l'enceinte comprend une ouverture destinée à évacuer les gaz évacués dans le milieu liquide et non incorporés dans le milieu liquide.

Avantageusement, l'installation de destruction de déchets comprend en outre un système de chauffage de la chambre ne générant pas de composé chimique lors de son utilisation.

L'invention concerne aussi un procédé de destruction de déchets comprenant au moins des traces de matériaux énergétiques, préférentiellement de propergol, le procédé étant mis en oeuvre dans une installation selon l'invention, le procédé étant caractérisé en ce qu'il comprend les étapes suivantes définissant un cycle de destruction :
- Alimentation de la chambre en déchets à détruire ;
- Combustion des déchets à détruire dans la chambre, générant des gaz et des résidus solides ;
- Evacuation des gaz et de résidus solides volatiles par le conduit d'évacuation ;
- Mise en contact des gaz évacués et des résidus solides volatiles à la seconde extrémité du conduit d'évacuation avec le milieu liquide ;
- Incorporation d'une partie des gaz et des résidus solides volatiles dans le milieu liquide.

Avantageusement, le procédé de destruction selon l'invention comprend en outre, après l'étape d'incorporation d'une partie des gaz et des résidus solides volatiles dans le milieu liquide, une étape de traitement du milieu liquide, délivrant une matière sèche après évaporation et une eau traitée, préférentiellement destinée à être réinjectée dans l'enceinte en tant que milieu liquide.

Avantageusement, le procédé de destruction selon l'invention comprend une étape d'injection, dans la chambre, de gaz inerte, préférentiellement de l'azote, pendant le cycle de destruction, et/ou d'air en fin de cycle de destruction.

Avantageusement, le procédé de destruction selon l'invention comprend une étape d'augmentation de la durée de contact des gaz évacués avec le milieu liquide après l'étape de mise en contact des gaz évacués avec le milieu liquide, pendant l'étape d'incorporation d'une partie des gaz et des résidus solides volatiles dans le milieu liquide.

Avantageusement, le procédé de destruction selon l'invention comprend une étape d'évacuation par une ouverture du toit de l'enceinte des gaz évacués dans le milieu liquide et non incorporés dans le milieu liquide.

Avantageusement, le procédé de destruction selon l'invention comprend une étape d'injection, dans la chambre, de gaz inerte entre l'étape d'alimentation de la chambre en déchets à détruire et l'étape de combustion des déchets à détruire.

Avantageusement, le système de chauffage est mis en oeuvre pour initier la combustion des déchets à détruire.

Avantageusement, le procédé de destruction selon l'invention comprend une étape d'injection d'air dans la chambre en fin d'étape de combustion des déchets à détruire.

Avantageusement, le procédé de destruction selon l'invention comprend entre l'étape d'alimentation de la chambre en déchets à détruire et l'étape de combustion, une étape d'assèchement des déchets à détruire au moyen d'un système de chauffage de la chambre ne générant pas de composé chimique lors de son utilisation.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement une installation de destruction de déchets pyrotechniques selon le principe de l'invention ;
la figure 2 représente schématiquement un mode de réalisation de l'installation de destruction selon l'invention ;
la figure 3 représente schématiquement un autre mode de réalisation de l'installation de destruction selon l'invention ;
la figure 4 représente schématiquement un autre mode de réalisation de l'installation de destruction qui ne fait pas partie de l'invention ;
la figure 5 représente un organigramme des étapes d'un procédé de destruction de déchets pyrotechniques selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

Comme indiqué en introduction de ce document, l'invention s'applique à des déchets pyrotechniques, c'est-à-dire à des déchets comprenant au moins des traces de matériaux énergétiques, préférentiellement des traces de propergol. En d'autres termes, il s'agit de déchets brûlables. Par exemple, un déchet pyrotechnique peut être un déchet qui a été mis en contact avec un matériau à haute valeur énergétique, de type propergol, et qui fait que ce déchet comporte des traces de ce matériau.

L'objet de l'invention réside dans le fait d'assurer une destruction propre de tout type de déchets pyrotechniques par combustion et transfert des polluants (produits de la combustion sous forme de gaz et résidus solides) dans un milieu liquide.

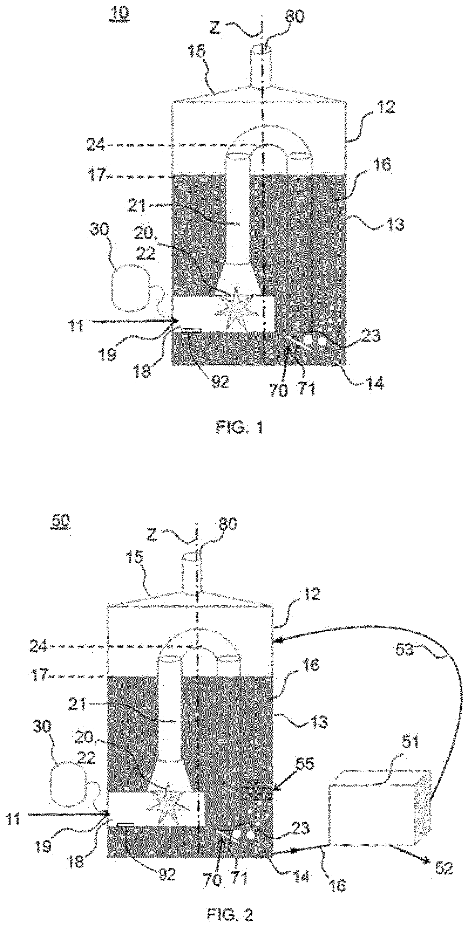

La figure 1 représente schématiquement une installation 10 de destruction de déchets pyrotechniques selon le principe de l'invention. L'installation 10 de destruction de déchets 11 comprenant au moins des traces de matériaux énergétiques, préférentiellement de propergol, comprend une enceinte 12 délimitée par des parois latérales 13, un fond 14 et un toit 15. A titre d'exemple non-limitatif, le toit peut être une bâche de canalisation des gaz permettant de relâcher le monoxyde de carbone le plus haut possible de l'installation. Le toit (ou la bâche) évite le remplissage intempestif de l'enceinte (par exemple par des éléments extérieurs de type feuilles d'arbre, pluie, ...). L'enceinte 12 s'étend verticalement selon un axe Z. L'enceinte 12 est au moins partiellement remplie d'un milieu liquide 16, jusqu'à un premier niveau 17 (qui correspond à une première hauteur de l'enceinte selon l'axe Z). Le milieu liquide 16 est préférentiellement de l'eau, mais il peut aussi être de l'eau de mer. Dans ce cas, il faut veiller à ce que les parois de l'enceinte et les éléments dans l'enceinte ait reçu préalablement un traitement anticorrosion. Bien que l'eau reste le milieu liquide préférentiel, un Homme du métier saura, à la lecture de ce qui suit, qu'il est possible de mettre en oeuvre l'invention avec un autre milieu liquide compatible de son rôle qui sera détaillé ci-après.

L'installation 10 de destruction comprend une chambre 18, immergée dans le milieu liquide 16 de l'enceinte 12. La chambre 18 est préférentiellement totalement immergée dans le milieu liquide 16. Toutefois, il est aussi envisageable d'avoir une chambre partiellement immergée, auquel cas la chambre 18 serait située à une hauteur supérieure de l'enceinte 12 par rapport à sa représentation sur la figure 1, de sorte à ce qu'une partie supérieure de la chambre 18 soit au-dessus du premier niveau 17. Une chambre 18 positionnée vers le bas de l'enceinte présente l'avantage d'être totalement immergée. La chambre profite ainsi de la masse du milieu liquide qui l'entoure pour contribuer à son refroidissement. Positionnée à hauteur d'homme, l'avantage est de permettre un remplissage de la chambre plus aisé. Une autre variante de l'installation qui ne fait pas partie de l'invention sera présentée ci-après avec une chambre 18 de combustion externe à l'enceinte 12.

La chambre 18 comprend une entrée 19 s'ouvrant sur une des parois latérales 13 de l'enceinte 12. L'entrée 19 est destinée à alimenter la chambre 18 immergée en déchets 11 à détruire par combustion dans la chambre immergée 18. Bien évidemment, en fonctionnement de l'installation, l'entrée 19 est fermée hermétiquement. La chambre 18 comprend aussi une sortie 20 destinée à l'évacuation des produits issus de la combustion. La chambre 18 peut être dénommée chambre sèche. En effet, bien qu'immergée dans le milieu liquide, l'intérieur de la chambre 18 n'est pas en contact avec le milieu liquide 16. L'entrée 19 assure un accès vers l'extérieur de l'installation pour pouvoir introduire en toute sécurité dans la chambre 18 les déchets pyrotechniques à détruire.

La chambre 18 comprend avantageusement un système d'allumage intégré, réutilisable pour initier la combustion des déchets 11. L'accès direct à la chambre depuis l'entrée 19 et une largeur d'ouverture adéquate facilitent le chargement des déchets à détruire. Le volume interne de la chambre 18 est avantageusement adapté au conditionnement des déchets.

L'immersion (totale ou même partielle) de la chambre dans le milieu liquide permet de profiter du refroidissement des parois de la chambre 18. L'intérieur de la chambre 18 peut être tapissé de tout ou partie d'un revêtement de protection thermique interne. L'installation selon l'invention peut également comprendre plusieurs chambres 18 indépendantes dans la même enceinte 12 afin d'augmenter la capacité d'élimination des déchets.

L'installation comprend en outre un conduit d'évacuation 21 s'étendant entre une première extrémité 22 et une seconde extrémité 23 du conduit d'évacuation 21. La première extrémité 22 est connectée à la sortie 20 de la chambre immergée 18. La connexion entre le contenu de la chambre 18 et l'intérieur du conduit 21 est donc hermétique. Les produits issus de la combustion dans la chambre 18 sont nécessairement orientés dans le conduit 21. La seconde extrémité 23 du conduit 21 est située dans le milieu liquide 16, préférentiellement à proximité du fond 14 de l'enceinte 12. Comme représenté sur la figure 1, le conduit d'évacuation 21 s'élève entre sa première extrémité 22 et sa seconde extrémité 23 jusqu'à un second niveau 24, supérieur au premier niveau 17 (et supérieur à la partie supérieure de la chambre 18 dans le cas où la chambre 18 est partiellement immergée. En d'autres termes, dans le cas d'une chambre 18 semi-immergée, la première extrémité 22 connectée à la sortie 20 de la chambre 18 doit être inférieure au second niveau 24. Dans le cas d'une sortie au-dessus du niveau 24, le siphon inversé n'est pas nécessaire), le conduit d'évacuation 21 étant configuré pour évacuer, à la seconde extrémité 23 dans le milieu liquide 16, des gaz et des résidus solides volatiles produits dans la chambre 18 immergée lors de la combustion. En d'autres termes, le conduit d'évacuation 21 est un siphon inversé ou col de cygne. La première extrémité 22 du conduit 21 est connectée hermétiquement à la chambre 18 et la seconde extrémité 23 du conduit 21 baigne dans le milieu liquide. Le conduit d'évacuation assure le transfert des polluants (produits de la combustion sous forme de gaz, éventuellement produits sous forme liquide, et résidus solides volatiles) depuis la chambre 18 vers le milieu liquide 16. En fin de combustion des déchets 11, il peut rester des résidus inertes (métalliques par exemple) dans la chambre 18. En effet, on peut noter que des résidus solides non volatiles, et non pyrotechniques peuvent subsister à l'intérieur de la chambre. Ces résidus pourront être traités en filière classique ou spécialisée selon la nature de ceux-ci.

La hauteur du milieu liquide 16 dans l'enceinte 12 doit être suffisante pour assurer un temps de séjour optimal des espèces gazeuses générées par la combustion afin de favoriser la dissolution dans l'eau de toutes les matières et de tous les gaz solubles dans l'eau. Les résidus solides (par exemple les particules métalliques) sont quant à eux conduits, par phénomène de décantation, à se déposer au fond de l'enceinte 12.

Ainsi, l'invention consiste à faire brûler les déchets 11 dans la chambre 18 sèche. Optionnellement, la chambre 18 peut comprendre, au niveau de la sortie 20, connectée à la première extrémité 22, ou plus généralement dans le conduit 21 entre la première extrémité 22 et la seconde extrémité 23, un dispositif de type clapet ou opercule et/ou un dispositif convergent/divergent pour assurer une certaine surpression des gaz dans la chambre 18 afin de favoriser un bon allumage et une bonne combustion des déchets. La disposition de la chambre 18 facilite l'utilisation de l'installation puisqu'elle offre un accès direct à la chambre pour y déposer les déchets 11. La combustion des déchets 11 génère des gaz et des résidus solides, ainsi qu'une légère surpression (dépendant de la combustion, et donc des déchets 11). Le dégagement de gaz et la surpression entraînent les produits de combustion dans le conduit 21, sec sur une première branche depuis sa première extrémité, et qui plonge dans le milieu liquide 16 sur une seconde branche vers sa seconde extrémité 23. La pression des gaz de combustion dans le conduit 21 pousse l'eau présente dans le conduit 21 vers la seconde extrémité 23 du conduit 21. Pendant leur trajet dans le conduit 21, les gaz et particules solides sont introduits dans le milieu liquide 16, d'abord dans la seconde branche du conduit puis dans l'enceinte 12. L'efficacité du procédé selon l'invention repose principalement sur le temps de séjour, dans le milieu liquide 16, des produits de combustion dégagés lors de la combustion, le temps de séjour dans le milieu liquide des produits de combustion étant principalement fonction de la profondeur du milieu liquide de l'enceinte. Le but recherché est de pouvoir contenir, au sein de l'enceinte renfermant le milieu liquide dans lequel est immergée la chambre 18 où s'opère la combustion, la plus grande part des espèces chimiques gazeuses (acide chlorhydrique par exemple), liquides et solides (sels organométalliques,...) générées par la combustion des déchets 11, la rétention de ces produits de combustion étant réalisée par différents mécanismes physico-chimiques et thermodynamiques tels que des mécanismes de dissolution, de condensation ou encore de trempe.

Le conduit d'évacuation 21 a un rôle important puisqu'il assure la transition entre la chambre 18 immergée, sèche, et le milieu liquide 16. C'est dans ce conduit qu'a lieu le transfert des gaz et résidus solides volatiles d'un environnement gazeux vers un environnement liquide. De plus, le conduit d'évacuation 21 forme un tampon entre le milieu liquide 16 et la chambre 18. Sa portion (préférentiellement en forme de U) entre les deux branches, portion située au-dessus du premier niveau 17 (c'est-à-dire la surface supérieure du milieu liquide 16 dans l'enceinte 12), assure un volume d'air qui assure le blocage par air permettant d'éviter les effets de refoulement d'une partie du milieu liquide vers la chambre 18 une fois la combustion terminée.

Dans un mode de réalisation de l'invention, l'installation de destruction peut comprendre un injecteur 30 de gaz relié à l'entrée 19 de la chambre 18 immergée. L'injecteur 30 de gaz est configuré pour injecter dans la chambre 18 immergée du gaz inerte, préférentiellement de l'azote, et/ou de l'air en fonction de la nature du déchet 11. Alternativement, l'installation de destruction selon l'invention peut comprendre plusieurs injecteurs 30, certains étant des injecteurs de gaz inerte dédié, et d'autres étant des injecteurs d'air. L'injection de gaz inerte pendant le cycle de combustion des déchets permet une meilleure combinaison des polluants dans le milieu liquide. L'injection de gaz inerte contribue aussi à la surpression qui aide à l'évacuation des gaz vers et dans le conduit d'évacuation. En fin de cycle, l'injection d'air permet de réaliser un balayage pour évacuer les gaz restants afin d'éviter l'anoxie des opérateurs qui ouvrent la chambre 18 au niveau de l'entrée 19. Enfin, l'injecteur 30 peut également être configuré pour injecter, avant la fin de cycle, de l'oxygène ou de l'air pour assurer une combustion complète des déchets.

A noter que l'injecteur 30 de gaz est représenté sur toutes les figures illustrant l'installation selon l'invention. Cependant, bien que sa présence soit avantageuse, celle-ci est optionnelle.

Dans un autre mode de réalisation, le conduit d'évacuation 21 peut optionnellement comprendre un clapet anti-retour 70 disposé à la seconde extrémité 23, le clapet anti-retour 70 comprenant un élément de clapet 71 configuré pour être mobile entre une position de clapet fermé qui empêche un refoulement du milieu liquide 16 dans la chambre 18 immergée et une position de clapet ouvert dans laquelle les gaz et les résidus solides volatiles produits dans la chambre 18 immergée lors de la combustion sont évacués dans le milieu liquide 16. Le clapet anti-retour 70 permet d'éviter des effets de refoulement d'une partie du milieu liquide vers la chambre 18 une fois la combustion terminée (notamment quand un opérateur ouvre l'entrée 19 de la chambre 18). En effet, l'élément de clapet 71 est poussé vers sa position ouverte par les gaz et la surpression générés lors de la combustion, et éventuellement complétés par l'injection de gaz inerte, et les produits de combustion peuvent quitter le conduit 21 à sa seconde extrémité 23. Le clapet 70 peut également avoir une fonction (optionnelle) de modulation de la pression de la chambre afin d'améliorer la combustion dans la chambre 18. En fin de cycle, il n'y a plus de surpression depuis la chambre 18, l'élément de clapet 71 assure la fermeture du conduit 21, de sorte que l'eau (ou tout autre milieu liquide considéré) ne puisse remonter vers la chambre 18.

Le tableau ci-dessous illustre, au travers d'observations réalisées lors de la destruction de propergol solide de type composite, un exemple d'espèces chimiques générées lors de la combustion de propergol solide.

| **Espèces chimiques dégagées** | | **Etats** | **Fractions massiques présents dans les gaz de combustion** | **Mécanismes observés au cours du traitement** |
|---|---|---|---|---|
| **Abréviation** | **Dénomination** | | | |
| CO | Monoxyde de carbone | Gazeux | 21,2 % | Pas de réaction au contact de du milieu liquide (ici eau) de l'enceinte. Remonte à la surface et est évacué sous forme gazeuse. |
| CO₂ | Dioxyde de carbone | Gazeux | 2,8 % | Espèce soluble dans l'eau. Le temps de séjour amène à la transformation du CO2 en acide carbonique HCO3⁻ |
| HCl | Acide chlorhydrique | Gazeux | 20,2 % | Espèce très soluble dans l'eau. Transformation à l'état liquide au sein de l'enceinte |
| H2 | Hydrogène | Gazeux | 2,1 % | Espèce non soluble dans l'eau. Remonte à la surface et est évacuée sous forme gazeuse. |
| H₂O | Eau | Gazeux | 9,4 % | Espèce gazeuse qui se condense sous la forme liquide au sein de l'enceinte |
| N₂ | Azote | Gazeux | 8,3 % | Espèce non soluble dans l'eau. Ne se recombine pas avec l'oxygène atmosphérique à la surface du milieu liquide |
| Al₂O₃ | Alumine | Liquide | 34 % | Espèce condensée sous la forme solide au contact de l'eau. Piégée par décantation au fond de l'enceinte |
| FeCl₂ | Chlorure ferreux | Liquide | 1,5 % | Espèce soluble dans l'eau. Reste piégée dans l'enceinte |

Certaines espèces gazeuses ne subissent aucune transformation lors de leur passage dans le milieu liquide, de sorte qu'elles remontent en surface et se retrouvent dans le volume de l'enceinte 12 entre le premier niveau 17 et le toit 15. Les espèces gazeuses ne subissant aucune transformation peuvent présenter potentiellement un danger pour d'éventuels opérateurs, notamment le monoxyde de carbone. Par ailleurs, le rejet de gaz dans l'atmosphère est sujet à règlementations, notamment celle des incinérateurs industriels qui fixe le seuil maximum de rejet, règlementation matérialisée par les arrêtés préfectoraux relatifs à l'exploitation du site industriel considéré dans lequel le procédé est mis en oeuvre. C'est pourquoi dans une forme de mise en oeuvre préférée, le toit 15 de l'enceinte 12 comprend une ouverture 80 destinée à évacuer les gaz évacués dans le milieu liquide 16 et non incorporés dans le milieu liquide 16. Elle évite également la création d'une zone atex (c'est-à-dire une atmosphère explosive) entre la surface du liquide 17 et le toit 15. Les gaz peuvent ainsi être évacués vers l'atmosphère à condition que leur concentration soit inférieure au seuil maximum de rejet. Alternativement, l'installation selon l'invention peut comprendre un dispositif d'aspiration (hotte aspirante) connecté à l'ouverture 80, qui permet de récupérer ces espèces gazeuses et de les traiter par traitement catalytique ou tout autre traitement adapté.

La figure 2 représente schématiquement un mode de réalisation de l'installation 50 de destruction selon l'invention. Dans ce mode de réalisation, l'installation 50 comprend les mêmes éléments (optionnels ou pas) que l'installation 10 décrite précédemment. Elle comprend en outre une unité de traitement 51 du milieu liquide 16 configurée pour être alimentée par le milieu liquide 16 auquel les gaz et résidus solides volatiles produits lors de la combustion se sont incorporés/recombinés et pour délivrer une matière inerte sèche (après évaporation) 52 (boues à forte concentration d'eau pouvant être évacuées dans les filières classiques de traitement de déchets) et une eau traitée 53, préférentiellement destinée à être réinjectée dans l'enceinte 12 en tant que milieu liquide 16. L'unité de traitement 51 vise à traiter le milieu liquide contenu dans l'enceinte 12 et dont la composition est modifiée du fait de l'incorporation des polluants (par recombinaison chimique ou sous forme de boues suite au dépôt de certains résidus initialement solides). L'unité de traitement permet de récupérer les éléments dissouts dans le milieu liquide. Le milieu liquide à composition modifiée est envoyé (en continu ou périodiquement) au moyen d'un réseau de canalisation et de pompe vers l'unité de traitement 51 au sein de laquelle le milieu liquide est débarrassé le plus possible des produits issus de la combustion.

L'eau traitée 53 peut être évacuée en eaux usées, ou bien elle peut être réutilisée dans l'enceinte en tant que milieu liquide 16 nettoyé de tout polluant. Le transfert peut être direct (continu) ou via un réservoir tampon de transfert (optionnel).

Les espèces solides, généralement sous forme de boues, peuvent également être dirigées vers l'unité de traitement 51 et pourront être captées dans l'unité de traitement ou une unité annexe. Alternativement, ces produits solides qui se sont, sous l'effet de la gravité, accumulés au fond de l'enceinte 12 au cours des cycles successifs peuvent être évacués périodiquement vers un bassin de stockage annexe. Ces déchets sont ensuite séparés et recyclés de manière appropriée. Ils font l'objet soit d'opérations de valorisation en ce qui concerne les produits recyclables, soit d'une mise en décharge pour les déchets ultimes non recyclables. Par exemple, les éléments métalliques peuvent être recyclés en fonderie pour la production de nouvelles pièces métalliques.

Dans un mode de réalisation, l'installation 50 peut comprendre un dispositif 55 d'augmentation de la durée de contact des gaz évacués avec le milieu liquide 16. Ce dispositif 55 est optionnel. Il permet d'optimiser les échanges gaz/eau (ou plus généralement gaz/milieu liquide) et ainsi permettre une recombinaison plus importante des gaz dans le milieu liquide. Sur la figure 2, le dispositif 55 comprend des grilles perforées disposées à différents niveaux (selon la hauteur) dans l'enceinte 12. En suivant le trajet des gaz, en partant de la partie basse de l'enceinte et en remontant vers la partie haute, les grilles se succèdent avantageusement avec des perforations de diamètre de plus en plus petit. Il en résulte que les grosses bulles de gaz sont cassées en plus petites bulles, à leur tour scindées en encore plus petites bulles pour permettre une surface de contact gaz/milieu liquide plus importante et ainsi faciliter l'incorporation de l'espèce gazeuse dans le milieu liquide. Bien évidemment, le dispositif 55 est également envisageable dans l'installation 10 présentée sur la figure 1.

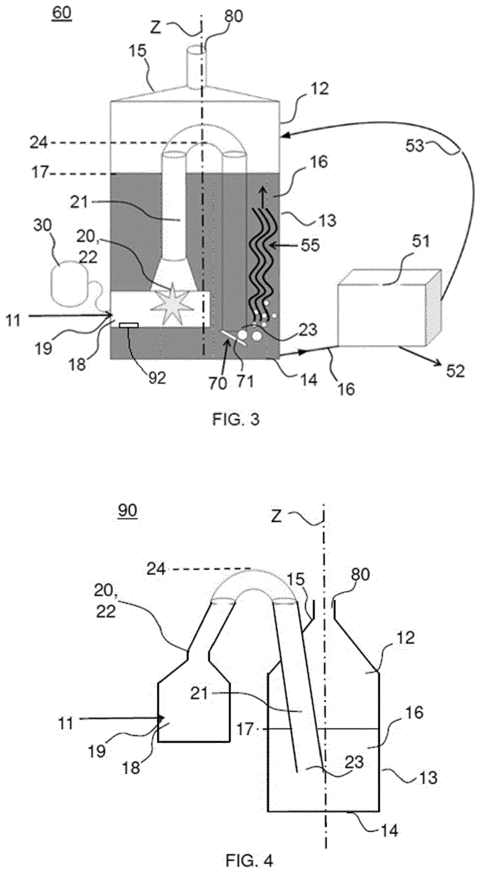

La figure 3 représente schématiquement un autre mode de réalisation de l'installation 60 de destruction selon l'invention. L'installation 60 est identique à l'installation 50, avec pour seule différence le dispositif 55 d'augmentation de la durée de contact des gaz évacués avec le milieu liquide 16. Dans ce mode de réalisation le dispositif 55 prend la forme de chicanes. Les chicanes imposent aux espèces gazeuses un parcours plus long pendant la phase de remontée en surface. Il en résulte une durée de contact des gaz dans le milieu liquide plus importante. Les chicanes peuvent être parallèles entre elles, ou bien elles peuvent être plus espacées dans la partie inférieure de l'enceinte pour accueillir des bulles gazeuses de plus grande taille, et ainsi assurer le débit requis des gaz en sortie du conduit 21. Le dispositif 55 peut être un mixte de grille(s) (telles que représentées sur la figure 2) et chicanes (telles que représentées sur la figure 3) afin d'augmenter la surface de contact (taille des bulles) et un temps de transfert dans le liquide 16. Bien évidemment, le dispositif 55 est également envisageable dans l'installation 10 présentée sur la figure 1.

La figure 4 représente schématiquement un autre mode de réalisation de l'installation 90 de destruction qui ne fait pas partie de l'invention. L'installation 90 comprend une enceinte 12 délimitée par des parois latérales 13, un fond 14 et un toit 15, l'enceinte 12 étant au moins partiellement remplie d'un milieu liquide 16, préférentiellement d'eau, jusqu'à un premier niveau 17. L'installation 90 comprend une chambre 18 comprenant une entrée 19 destinée à alimenter la chambre en déchets 11 à détruire par combustion dans la chambre 18, et une sortie 20. L'installation 90 comprend aussi un conduit d'évacuation 21 s'étendant entre une première extrémité 22 et une seconde extrémité 23, la première extrémité 22 étant connectée à la sortie 20 de la chambre 18, la seconde extrémité 23 étant située dans le milieu liquide 16, préférentiellement à proximité du fond 14 de l'enceinte 12, le conduit d'évacuation 21 s'élevant entre sa première extrémité 22 et sa seconde extrémité 23 jusqu'à un second niveau 24, supérieur au premier niveau 17, le conduit d'évacuation 21 étant configuré pour évacuer, à la seconde extrémité 23 dans le milieu liquide 16, des gaz et des résidus solides volatiles produits dans la chambre 18 lors de la combustion.

Ainsi, l'installation 90 diffère de l'installation 10 présentée à la figure 1 en ce que la chambre 18 est déportée à l'extérieur de l'enceinte 12. Le principe d'évacuation des gaz et résidus solides volatiles de combustion opère toujours avec le conduit d'évacuation 21, depuis la sortie 20 de la chambre vers le milieu liquide 16 de l'enceinte 12, et selon les mêmes principes que présentés précédemment. L'enceinte 12 comprend à cet effet une ouverture par laquelle le conduit 21 passe, l'ouverture permettant le passage du conduit 21 étant bien évidemment rendue hermétique par des moyens connus de l'Homme du métier.

Un Homme du métier comprend que l'installation 90, avec une chambre déportée, peut comprendre toutes les variantes présentées ci-dessus dans le cadre d'une installation avec une chambre immergée ou semi-immergée.

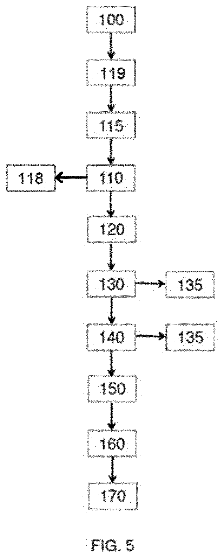

La figure 5 représente un organigramme des étapes d'un procédé de destruction de déchets pyrotechniques selon l'invention. Le procédé de destruction de déchets comprenant au moins des traces de matériaux énergétiques, préférentiellement de propergol, comprend les étapes suivantes définissant un cycle de destruction :
- Alimentation (étape 100) en déchets à détruire d'une chambre disposée dans ou à proximité d'une enceinte délimitée par des parois latérales, un fond et un toit, l'enceinte étant au moins partiellement remplie d'un milieu liquide, préférentiellement d'eau, jusqu'à un premier niveau de l'enceinte, la chambre étant immergée dans le milieu liquide;
- Combustion (étape 110) des déchets à détruire dans la chambre, générant des gaz et des résidus solides, accompagnés d'une surpression ;
- Evacuation (étape 120) des gaz et des résidus solides volatiles par un conduit d'évacuation s'étendant entre une première extrémité et une seconde extrémité, la première extrémité étant connectée à une sortie de la chambre, la seconde extrémité étant située dans le milieu liquide, préférentiellement à proximité du fond de l'enceinte, le conduit d'évacuation s'élevant entre sa première extrémité et sa seconde extrémité jusqu'à un second niveau, supérieur au premier niveau ;
- Mise en contact (étape 130) des gaz évacués et des résidus solides volatiles à la seconde extrémité du conduit d'évacuation avec le milieu liquide ;
- Incorporation (étape 140) d'une partie des gaz et des résidus solides volatiles dans le milieu liquide.

Le procédé de destruction selon l'invention peut comprendre en outre, après l'étape 140 d'incorporation d'une partie des gaz et des résidus solides volatiles dans le milieu liquide, une étape 150 de traitement du milieu liquide, délivrant une matière sèche (après évaporation) et une eau traitée, préférentiellement destinée à être réinjectée dans l'enceinte en tant que milieu liquide. Alternativement, ou en complément, le procédé de l'invention peut comprendre une étape de vidange de l'enceinte en eaux usées après traitement 150.

Avantageusement, le procédé de destruction selon l'invention comprend une étape 115 d'injection, dans la chambre 18, de gaz inerte, préférentiellement de l'azote (ou de l'air en fonction de la nature des déchets), pendant le cycle de destruction et plus précisément, entre l'étape d'alimentation 100 de la chambre 18 en déchets 11 à détruire et l'étape de combustion 110 des déchets à détruire. L'injection de gaz inerte est utile pour la destruction de déchets de type propergol comprenant à la fois un combustible et un comburant. L'injection de gaz inerte permet de réduite la teneur en oxygène dans la chambre 18, ce qui limite la création de composés autres que ceux issus de la combustion du propergol. Ainsi, moins de résidus sont à dissoudre dans le liquide 16. L'étape 115 intervient après avoir inséré dans la chambre 18 les déchets à détruire et après fermeture de l'ouverture 19 assurant une certaine étanchéité de la chambre 18.

En fin de cycle de destruction par combustion, le procédé de destruction selon l'invention comprend avantageusement une étape 118 d'injection d'air dans la chambre 18 permettant d'évacuer les gaz de combustion et certains résidus solides volatiles vers le conduit d'évacuation 21 et le milieu liquide 16. L'injection d'air permet également de rétablir le teneur en oxygène dans la chambre afin qu'un opérateur ouvrant la chambre en fin de cycle de destruction ne soit pas soumis à une ambiance anoxique.

Il est possible que les déchets 11 soient humides lors de leur introduction dans la chambre 18 à l'étape 100. Avantageusement entre l'étape 100 et l'étape de combustion 110, il est alors avantageux d'assécher les déchets 11 lors d'une étape 119 afin de faciliter leur combustion. L'assèchement peut être réalisé en élevant la température de la chambre 18 à une température inférieure à celle d'un auto allumage des déchets 11. Il est par exemple possible d'élever la température de la chambre à une température de l'ordre de 100°C par exemple par induction ou au moyen d'une résistance électrique de chauffage. De façon plus générale, il est avantageux de mettre en oeuvre tout système de chauffage 92 pour élever la température de la chambre 18 ne générant pas de composé chimique lors de son utilisation. Il est par exemple utile d'éviter l'emploi de combustibles fossiles, comme par exemple du kérosène, susceptible de générer des gaz de combustion qui augmenterait la quantité de gaz à dissoudre dans le milieu liquide.

Avantageusement le moyen pour élever la température de la chambre pour l'assèchement est également utilisé pour initier la combustion. Plus précisément, le moyen pour élever la température de la chambre peut être mis en oeuvre pour atteindre une température supérieure à celle d'auto allumage des déchets 11, par exemple de l'ordre de 400°C.

Le procédé de destruction selon l'invention peut comprendre une étape 135 d'augmentation de la durée de contact des gaz évacués avec le milieu liquide après l'étape 130 de mise en contact des gaz évacués avec le milieu liquide, pendant l'étape 140 d'incorporation d'une partie des gaz et des résidus solides volatiles dans le milieu liquide.

Par ailleurs, le procédé de destruction selon l'invention peut comprendre une étape 160 d'évacuation par une ouverture du toit de l'enceinte des gaz évacués dans le milieu liquide et non incorporés dans le milieu liquide.

Enfin, le procédé de destruction selon l'invention peut comprendre une étape 170 d'aspiration des gaz pour traitement catalytique ou tout autre traitement adapté.

L'installation et le procédé de destruction de l'invention présentent de nombreux avantages par rapport à l'art antérieur. L'installation a un faible encombrement. Pour autant, l'invention donne la possibilité de traiter de gros volumes de déchets, soit par adaptation du volume de la chambre, soit par multiplication du nombre de chambres. Le procédé de l'invention est peu bruyant lors d'un cycle de destruction. Du fait de sa simplicité de construction, l'installation est modulaire, et il est tout à fait possible de faire varier le nombre de chambres, ainsi que le nombre d'unités de traitement associées). Comme cela apparait de la description de l'invention, le procédé est simple de mise en oeuvre, la mise et point et les réglages sont faciles puisqu'il n'y a pas de mécanisme complexe à mettre en oeuvre. Autre point important, l'invention permet de détruire un large spectre de déchets, par exemple des propergols composites ou homogènes, des déchets souillés, etc. Les déchets peuvent être purs ou avec des emballages et autres matières non pyrotechniques (métallique, caoutchouc, ou issu de produits pétroliers). Le principe peut aussi être adapté pour d'autres types de déchets pyrotechniques non mentionnés ici. De manière plus générale, le procédé de l'invention est adapté pour traiter tous déchets dont les émanations de gaz sont miscibles dans un milieu liquide (notamment l'eau).

II apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

## Revendications

1. Installation (10, 50, 60) de destruction de déchets (11) comprenant au moins des traces de matériaux énergétiques, préférentiellement de propergol, **caractérisée en ce qu'**elle comprend :
- une enceinte (12) délimitée par des parois latérales (13), un fond (14) et un toit (15), l'enceinte (12) étant au moins partiellement remplie d'un milieu liquide (16), préférentiellement d'eau, jusqu'à un premier niveau (17);
- une chambre (18) comprenant :
o une entrée (19), ladite entrée (19) étant destinée à alimenter la chambre (18) en déchets (11) à détruire par combustion dans la chambre (18) ;
o une sortie (20) ;
la chambre (18) étant immergée dans le milieu liquide (16) de l'enceinte (12), l'entrée (19) de la chambre (18) s'ouvrant sur une des parois latérales (13) de l'enceinte (12),
- un conduit d'évacuation (21) s'étendant entre une première extrémité (22) et une seconde extrémité (23), la première extrémité (22) étant connectée à la sortie (20) de la chambre (18), la seconde extrémité (23) étant située dans le milieu liquide (16), préférentiellement à proximité du fond (14) de l'enceinte (12), le conduit d'évacuation (21) s'élevant entre sa première extrémité (22) et sa seconde extrémité (23) jusqu'à un second niveau (24), supérieur au premier niveau (17), le conduit d'évacuation (21) étant configuré pour évacuer, à la seconde extrémité (23) dans le milieu liquide (16), des gaz et des résidus solides volatiles produits dans la chambre (18) lors de la combustion.

2. Installation (50, 60) de destruction de déchets selon la revendication 1, comprenant en outre une unité de traitement (51) du milieu liquide (16) configurée pour être alimentée par le milieu liquide (16) auquel les gaz et résidus solides volatiles produits lors de la combustion se sont incorporés et pour délivrer une matière sèche (52) et une eau traitée (53), préférentiellement destinée à être réinjectée dans l'enceinte (12) en tant que milieu liquide (16).

3. Installation (10, 50, 60) de destruction de déchets selon l'une quelconque des revendications 1 à 2, comprenant un injecteur (30) de gaz relié à l'entrée (19) de la chambre (18), l'injecteur (30) de gaz étant configuré pour injecter dans la chambre (18) du gaz inerte et/ou de l'air, le gaz inerte étant préférentiellement de l'azote.

4. Installation (10, 50, 60) de destruction de déchets selon l'une quelconque des revendications 1 à 3, comprenant un dispositif (55) d'augmentation de la durée de contact des gaz évacués avec le milieu liquide (16).

5. Installation (10, 50, 60) de destruction de déchets selon la revendication 4, dans laquelle le dispositif (55) d'augmentation de la durée de contact des gaz évacués avec le milieu liquide (16) comprend des grilles perforées disposées à différents niveaux dans l'enceinte (12) ; en suivant le trajet des gaz, en partant de la partie basse de l'enceinte (12) et en remontant vers la partie haute, les grilles se succèdent avec des perforations de diamètre de plus en plus petit.

6. Installation (10, 50, 60) de destruction de déchets selon la revendication 4, dans laquelle le dispositif (55) d'augmentation de la durée de contact des gaz évacués avec le milieu liquide (16) prend la forme de chicanes.

7. Installation (10, 50, 60) de destruction de déchets selon l'une quelconque des revendications 1 à 6, dans laquelle le conduit d'évacuation (21) comprend un clapet anti-retour (70) disposé à la seconde extrémité (23), le clapet anti-retour (70) comprenant un élément de clapet (71) configuré pour être mobile entre une position de clapet fermé qui empêche un refoulement du milieu liquide (16) dans la chambre (18) et une position de clapet ouvert dans laquelle les gaz et les résidus solides volatiles produits dans la chambre (18) lors de la combustion sont évacués dans le milieu liquide (16).

8. Installation (10, 50, 60) de destruction de déchets selon l'une quelconque des revendications 1 à 7, dans laquelle le toit (20) de l'enceinte (12) comprend une ouverture (80) destinée à évacuer les gaz évacués dans le milieu liquide (16) et non incorporés dans le milieu liquide (16).

9. Installation (10, 50, 60) de destruction de déchets selon l'une quelconque des revendications 1 à 8, comprenant en outre un système de chauffage (92) de la chambre (18) ne générant pas de composé chimique lors de son utilisation.

10. Procédé de destruction de déchets comprenant au moins des traces de matériaux énergétiques, préférentiellement de propergol, le procédé étant mis en oeuvre dans une installation selon l'une des revendications précédentes ; le procédé comprenant les étapes suivantes définissant un cycle de destruction :
- Alimentation (100) de la chambre (18) en déchets à détruire ;
- Combustion (110) des déchets à détruire dans la chambre (18), générant des gaz et des résidus solides ;
- Evacuation (120) des gaz et de résidus solides volatiles par le conduit d'évacuation (21) ;
- Mise en contact (130) des gaz évacués et des résidus solides volatiles à la seconde extrémité (23) du conduit d'évacuation (21) avec le milieu liquide (16) ;
- Incorporation (140) d'une partie des gaz et des résidus solides volatiles dans le milieu liquide (16).

11. Procédé de destruction selon la revendication 10, comprenant en outre, après l'étape (140) d'incorporation d'une partie des gaz et des résidus solides volatiles dans le milieu liquide (16), une étape (150) de traitement du milieu liquide, délivrant une matière sèche après évaporation et une eau traitée, préférentiellement destinée à être réinjectée dans l'enceinte en tant que milieu liquide.

12. Procédé de destruction selon la revendication 10 ou 11, comprenant une étape (115, 118) d'injection, dans la chambre, de gaz inerte, préférentiellement de l'azote, pendant le cycle de destruction, et/ou d'air en fin de cycle de destruction.

13. Procédé de destruction selon la revendication 12, comprenant une étape (115) d'injection, dans la chambre (18), de gaz inerte entre l'étape d'alimentation (100) de la chambre (18) en déchets à détruire et l'étape de combustion (110) des déchets à détruire.

14. Procédé de destruction selon l'une quelconque des revendications 12 ou 13, comprenant une étape (118) d'injection d'air dans la chambre (18) en fin d'étape de combustion (110) des déchets à détruire.

15. Procédé de destruction selon l'une quelconque des revendications 10 à 14, comprenant entre l'étape d'alimentation (100) de la chambre (18) en déchets à détruire et l'étape de combustion (110), une étape (119) d'assèchement des déchets à détruire au moyen d'un système de chauffage (92) de la chambre (18) ne générant pas de composé chimique lors de son utilisation.

16. Procédé de destruction selon la revendication 15, dans lequel le système de chauffage (92) est mis en oeuvre pour initier la combustion (110) des déchets à détruire.

17. Procédé de destruction selon l'une quelconque des revendications 10 à 16, comprenant une étape (135) d'augmentation de la durée de contact des gaz évacués avec le milieu liquide après l'étape (130) de mise en contact des gaz évacués avec le milieu liquide, pendant l'étape (140) d'incorporation d'une partie des gaz et des résidus solides volatiles dans le milieu liquide.

18. Procédé de destruction selon l'une quelconque des revendications 10 à 17, comprenant une étape (160) d'évacuation par une ouverture du toit de l'enceinte des gaz évacués dans le milieu liquide et non incorporés dans le milieu liquide.

## Patentansprüche

1. Anlage (10, 50, 60) zur Vernichtung von Abfällen (11), die mindestens Spuren von energetischen Materialien, vorzugsweise Propergol, umfassen, **dadurch gekennzeichnet, dass** sie Folgendes umfasst:
- ein Gehäuse (12), das durch Seitenwände (13), einen Boden (14) und eine Decke (15) begrenzt wird, wobei das Gehäuse (12) mindestens teilweise bis zu einem ersten Niveau (17) mit einem flüssigen Medium (16), vorzugsweise Wasser, gefüllt ist;
- eine Kammer (18), die Folgendes umfasst:
∘ einen Einlass (19), wobei der Einlass (19) dazu bestimmt ist, die Kammer (18) mit Abfällen (11) zu versorgen, die durch Verbrennung in der Kammer (18) zerstört werden sollen;
∘ einen Auslass (20);
wobei die Kammer (18) in das flüssige Medium (16) des Gehäuses (12) eingetaucht ist, wobei der Einlass (19) der Kammer (18) sich an einer der Seitenwände (13) des Gehäuses (12) öffnet,
- eine Abführungsleitung (21), die sich zwischen einem ersten Ende (22) und einem zweiten Ende (23) erstreckt, wobei das erste Ende (22) mit dem Auslass (20) der Kammer (18) verbunden ist, sich das zweite Ende (23) im flüssigen Medium (16), vorzugsweise in der Nähe des Bodens (14) des Gehäuses (12), befindet, die Abführungsleitung (21) zwischen seinem ersten Ende (22) und seinem zweiten Ende (23) bis zu einem zweiten Niveau (24), das höher als das erste Niveau (17) ist, ansteigt und die Abführungsleitung (21) dazu konfiguriert ist, am zweiten Ende (23) in dem flüssigen Medium (16) Gase und flüchtige feste Rückstände abzuführen, die in der Kammer (18) während der Verbrennung erzeugt werden.

2. Anlage (50, 60) zur Vernichtung von Abfällen nach Anspruch 1, die ferner eine Behandlungseinheit (51) für das flüssige Medium (16) umfasst, die dazu konfiguriert ist, von dem flüssigen Medium (16), in dem die Gase und flüchtigen festen Rückstände, die während der Verbrennung erzeugt werden, eingebracht sind, versorgt zu werden und eine Trockenmasse (52) und behandeltes Wasser (53) abzuführen, das vorzugsweise dazu bestimmt ist, als flüssiges Medium (16) wieder in das Gehäuse (12) eingespeist zu werden.

3. Anlage (10, 50, 60) zur Vernichtung von Abfällen nach einem der Ansprüche 1 bis 2, die einen Gasinjektor (30) umfasst, der mit dem Einlass (19) der Kammer (18) verbunden ist, wobei der Gasinjektor (30) dazu konfiguriert ist, Inertgas und/oder Luft in die Kammer (18) einzuspeisen, wobei das Inertgas vorzugsweise Stickstoff ist.

4. Anlage (10, 50, 60) zur Vernichtung von Abfällen nach einem der Ansprüche 1 bis 3, die eine Vorrichtung (55) zur Verlängerung der Kontaktzeit zwischen den abgeführten Gasen und dem flüssigen Medium (16) umfasst.

5. Anlage (10, 50, 60) zur Vernichtung von Abfällen nach Anspruch 4, wobei die Vorrichtung (55) zur Verlängerung der Kontaktzeit zwischen den abgeführten Gasen und dem flüssigen Medium (16) perforierte Gitter umfasst, die auf unterschiedlichen Ebenen im Gehäuse (12) angeordnet sind; wobei die Gitter dem Weg der Gase folgend, vom unteren Teil des Gehäuses (12) ausgehend und zum oberen Teil hin ansteigend nacheinander Perforationen mit immer kleinerem Durchmesser aufweisen.

6. Anlage (10, 50, 60) zur Vernichtung von Abfällen nach Anspruch 4, wobei die Vorrichtung (55) zur Verlängerung der Kontaktzeit zwischen den abgeführten Gasen und dem flüssigen Medium (16) in Form von Ablenkplatten vorliegt.

7. Anlage (10, 50, 60) zur Vernichtung von Abfällen nach einem der Ansprüche 1 bis 6, wobei die Abführungsleitung (21) ein am zweiten Ende angeordnetes Rückschlagventil (70) umfasst, wobei das Rückschlagventil (70) ein Ventilelement (71) umfasst, das dazu konfiguriert ist, zwischen einer geschlossenen Ventilposition, die ein Zurückfließen des flüssigen Mediums (16) zurück in die Kammer (18) verhindert, und einer offenen Ventilposition, in der die Gase und die flüchtigen festen Rückstände, die während der Verbrennung in der Kammer (18) erzeugt werden, in das flüssige Medium (16) abgeführt werden, beweglich zu sein.

8. Anlage (10, 50, 60) zur Vernichtung von Abfällen nach einem der Ansprüche 1 bis 7, wobei die Decke (20) des Gehäuses (12) eine Öffnung (80) umfasst, die dazu bestimmt ist, die in das flüssige Medium (16) abgeführten und nicht in das flüssige Medium (16) eingebrachten Gase abzuführen.

9. Anlage (10, 50, 60) zur Vernichtung von Abfällen nach einem der Ansprüche 1 bis 8, die ferner ein Heizsystem (92) für die Kammer (18) umfasst, das während seines Gebrauchs keine chemischen Verbindungen erzeugt.

10. Verfahren zur Vernichtung von Abfällen, die mindestens Spuren von energetischen Materialien, vorzugsweise Propergol, umfassen, wobei das Verfahren in einer Anlage nach einem der vorhergehenden Ansprüche durchgeführt wird, wobei das Verfahren die folgenden Schritte umfasst, die einen Vernichtungszyklus definieren:
- Versorgen (100) der Kammer (18) mit zu vernichtenden Abfällen;
- Verbrennen (110) der zu vernichtenden Abfälle in der Kammer (18), wodurch Gase und feste Rückstände erzeugt werden;
- Abführen (120) der Gase und flüchtigen festen Rückstände über die Abführungsleitung (21);
- Inkontaktbringen (130) der abgeführten Gase und flüchtigen festen Rückstände mit dem flüssigen Medium (16) am zweiten Ende (23) der Abführungsleitung (21);
- Einbringen (140) eines Teils der Gase und der flüchtigen festen Rückstände in das flüssige Medium (16).

11. Vernichtungsverfahren nach Anspruch 10, das nach dem Schritt (140) des Einbringens eines Teils der Gase und der flüchtigen festen Rückstände in das flüssige Medium (16) ferner einen Schritt (150) des Behandelns des flüssigen Mediums umfasst, was nach der Verdampfung eine Trockenmasse und behandeltes Wasser liefert, das vorzugsweise dazu bestimmt ist, als flüssiges Medium wieder in das Gehäuse eingespeist zu werden.

12. Vernichtungsverfahren nach Anspruch 10 oder 11, das einen Schritt (115, 118) des Einspeisens von Inertgas, vorzugsweise Stickstoff, während des Vernichtungszyklus und/oder Luft am Ende des Vernichtungszyklus in die Kammer umfasst.

13. Vernichtungsverfahren nach Anspruch 12, das einen Schritt (115) des Einspeisens von Inertgas in die Kammer (18) zwischen dem Schritt des Versorgens (100) der Kammer (18) mit zu vernichtenden Abfällen und dem Schritt des Verbrennens (110) der zu vernichtenden Abfällen umfasst.

14. Vernichtungsverfahren nach einem der Ansprüche 12 oder 13, das einen Schritt (118) des Einspeisens von Luft in die Kammer (18) am Ende des Schritts (110) des Verbrennens der zu vernichtenden Abfällen umfasst.

15. Vernichtungsverfahren nach einem der Ansprüche 10 bis 14, das zwischen dem Schritt des Versorgens (100) der Kammer (18) mit zu vernichtenden Abfällen und dem Schritt des Verbrennens (110) einen Schritt (119) des Trocknens der zu vernichtenden Abfälle mittels eines Heizsystems (92) für die Kammer (18) umfasst, das während seines Gebrauchs keine chemischen Verbindungen erzeugt.

16. Vernichtungsverfahren nach Anspruch 15, wobei das Heizsystem (92) verwendet wird, um die Verbrennung (110) der zu vernichtenden Abfälle einzuleiten.

17. Vernichtungsverfahren nach einem der Ansprüche 10 bis 16, das einen Schritt (135) des Verlängerns der Kontaktzeit zwischen den abgeführten Gasen und dem flüssigen Medium nach dem Schritt (130) des Inkontaktbringens der abgeführten Gase mit dem flüssigen Medium während des Schritts (140) des Einbringens eines Teils der Gase und der flüchtigen festen Rückstände in das flüssige Medium umfasst.

18. Vernichtungsverfahren nach einem der Ansprüche 10 bis 17, das einen Schritt (160) des Abführens von Gasen, die in das flüssige Medium abgeführt werden und nicht in das flüssige Medium eingebracht sind, durch eine Öffnung in der Decke des Gehäuses umfasst.

## Claims

1. . An installation (10,50,60) for destroying waste (11) comprising at least traces of energetic materials, preferably propellant, **characterized in that** it comprises:
- an enclosure (12) delimited by lateral walls (13), a base (14) and a roof (15), the enclosure (12) being at least partially filled with a liquid medium (16), preferably water, up to a first level (17);
- a chamber (18) comprising:
∘ an inlet (19), said inlet (19) being intended to supply the chamber (18) with waste (11) to be destroyed by combustion in the chamber (18);
∘ an outlet (20);
the chamber (18) being immersed in the liquid medium (16) of the enclosure (12), the inlet (19) of the chamber (18) opening to one of the lateral walls (13) of the enclosure (12),
- a discharge line (12) extending between a first end (22) and a second end (23), the first end (22) being connected to the outlet (20) of the chamber (18), the second end (23) being situated in the liquid medium (16), preferably in the vicinity of the base (14) of the enclosure (12), the discharge line (21) rising between its first end (22) and its second end (23) to a second level (24) which is higher than the first level (17), the discharge line (21) being configured to discharge, at the second end (23) in the liquid medium (16), gases and volatile solid residues which are produced in the chamber (18) during combustion.

2. . The installation (50,60) for destroying waste according to claim 1, further comprising a treatment unit (51) for treating the liquid medium (16), said treatment unit configured to be supplied with liquid medium (16) wherein gases and volatile solid residues produced during combustion are incorporated and to dispense dry matter (52) and treated water (53), which is preferably intended to be re-injected into the enclosure (12) as liquid medium (16).

3. . The installation (10, 50, 60) for destroying waste according to any one of claims 1 to 2, comprising a gas injector (30) connected to the inlet (19) of the chamber (18), the gas injector (30) being configured to inject inert gas and/or air into the chamber (18), the inert gas preferably being nitrogen.

4. . The installation (10, 50, 60) for destroying waste according to any one of claims 1 to 3, comprising a device (55) for increasing the contact time between the discharged gases and the liquid medium (16).

5. . The installation (10, 50, 60) for destroying waste according to claim 4, wherein the device (55) for increasing the contact time between the discharged gases and the liquid medium (16) comprises perforated gratings which are disposed at different levels in the enclosure (12); following the path of the gases, starting from the lower part of the enclosure (12) and rising towards the upper part, the gratings successively have perforations of smaller and smaller diameter.

6. . The installation (10, 50, 60) for destroying waste according to claim 4, wherein the device (55) for increasing the contact time between the discharged gases and the liquid medium (16) takes the form of baffles.

7. . The installation (10, 50, 60) for destroying waste according to any one of claims 1 to 6, wherein the discharge line (21) comprises a non-return valve (70) disposed at the second end (23), the non-return valve (70) comprising a valve element (71) configured to be movable between a closed valve position which prevents liquid medium (16) from flowing back into the chamber (18), and an open valve position wherein gases and volatile solid residues produced in the chamber (18) during combustion are discharged in the liquid medium (16).

8. . The installation (10, 50, 60) for destroying waste according to any one of claims 1 to 7, wherein the roof (20) of the enclosure (12) comprises an opening (80) intended to discharge gases which are discharged in the liquid medium (16) and which are not incorporated in the liquid medium (16).

9. . The installation (10, 50, 60) for destroying waste according to any one of claims 1 to 8, further comprising a heating system (92) for heating the chamber (18), said heating system not generating any chemical compounds during use thereof.

10. . A method for destroying waste comprising at least traces of energetic materials, preferably propellant, the method being implemented in an installation according to one of the preceding claims, the method comprising the following steps defining a destruction cycle:
- Supplying (100) the chamber (18) with waste to be destroyed;
- Combusting (110) the waste to be destroyed in the chamber (18), generating gases and solid residues;
- Discharging (120) the gases and volatile solid residues via the discharge line (21);
- Bringing the discharged gases and volatile solid residues into contact (130) with the liquid medium (16) at the second end (23) of the discharge line (21);
- Incorporating (140) a portion of the gases and the volatile solid residues into the liquid medium (16).

11. . The destruction method according to claim 10, further comprising, after the step (140) of incorporating a portion of the gases and the volatile solid residues into the liquid medium (16), a step (150) of treating the liquid medium, delivering dry matter, after evaporation, and treated water, which is preferably intended to be re-injected into the enclosure as liquid medium.

12. . The destruction method according to claim 10 or 11, comprising a step (115, 118) of injecting, into the chamber, inert gas, preferably nitrogen, during the destruction cycle, and/or air at the end of the destruction cycle.

13. . The destruction method according to claim 12, comprising a step (115) of injecting inert gas into the chamber (18) between the step of supplying (100) the chamber (18) with waste to be destroyed and the step of combusting (110) the waste to be destroyed.

14. . The destruction method according any one of claims 12 or 13, comprising a step (118) of injecting air into the chamber (18) at the end of the step of combusting (110) the waste to be destroyed.

15. . The destruction method according to any one of claims 10 to 14, comprising, between the step of supplying (100) the chamber (18) with waste to be destroyed and the combustion step (110), a step (119) of drying out the waste to be destroyed by means of a heating system (92) for heating the chamber (18), said heating system not generating any chemical compounds during use thereof.

16. . The destruction method according to claim 15, wherein the heating system (92) is employed to initiate combustion (110) of the waste to be destroyed.

17. . The destruction method according to any one of claims 10 to 16, comprising a step (135) of increasing the contact time between the discharged gases and the liquid medium after the step (130) of bringing the discharged gases into contact with the liquid medium, during the step (140) of incorporating a portion of the gases and the volatile solid residues into the liquid medium.

18. . The destruction method according to any one of claims 10 to 17, comprising a step (160) of discharging gases which are discharged in the liquid medium and which are not incorporated in the liquid medium through an opening in the roof of the enclosure.
